# EUROPEAN PATENT APPLICATION

(11) **EP 4 782 510 A1**
(43) Date of publication of application: **29.07.2026**
(21) Application number: 24867391.5
(22) Date of filing: 14.09.2024
(51) Int. Cl.: C09G 1/02, C09G 1/00

(54) **CERIUM OXIDE-BASED POLISHING POWDER, PREPARATION METHOD, POLISHING SOLUTION, AND USE**

(30) Priority: 19.09.2023 CN 202311210359
(71) Applicant: Grirem Advanced Materials Co., Ltd., Beijing 100088 (CN); Grirem Hi-Tech Co., Ltd., Langfang, Hebei 065201 (CN)
(72) Inventor: YANG, Juanyu, Beijing 100088 (CN); WANG, Ning, Beijing 100088 (CN); ZHANG, Zhenyu, Beijing 100088 (CN); HUANG, Xiaowei, Beijing 100088 (CN); ZHENG, Yuanyuan, Beijing 100088 (CN); FENG, Zongyu, Beijing 100088 (CN)
(74) Representative: Huang, Liwei
(86) International application number: PCT/CN2024/119084
(87) International publication number: WO 2025/060983

(57) **Abstract**

A cerium oxide-based polishing powder comprising porous secondary particles assembled from a plurality of primary grains, wherein the primary grains have a pore diameter of 2 to 30 nm, a pore volume of 0.10 to 0.50 cm³/g, a specific surface area of 10 to 80 m²/g, and the content of trivalent cerium at the surface accounts for 10% to 40% of the total content of cerium at the surface, and a preparation method, a polishing solution and a use thereof. The microstructure of the cerium oxide-based polishing powder of the present invention is porous cerium oxide-based particles assembled from nano primary particles, and the self-assembled structure enables the cerium oxide-based particles to have a higher surface trivalent cerium content and a higher specific surface area at the same time, which is beneficial to obtaining a higher polishing rate; the sub-micron particle size improves its dispersibility in the polishing slurry; the porous structure reduces its Young's modulus, makes it not easy to break during the polishing process, improves the surface accuracy of the workpiece after polishing and prolongs the life of the polishing powder. Therefore, the cerium oxide-based polishing powder provided by the present invention has both excellent polishing rate and polishing accuracy and has a long service life.

## Description

### Cross Reference

This application is a continuation of International Application No. PCT/CN2024/119084, filed on September 14, 2024, which claims priority to Chinese Patent Application No. 202311210359.7, filed on September 19, 2023. The disclosures of the above-mentioned applications are hereby incorporated by reference in their entireties.

### Technical Field

The present invention relates to the technical field of rare earth functional materials, and in particular to a cerium oxide-based polishing powder and a preparation method, a polishing solution and a use thereof.

### Background Art

With the continuous progress of science and technology, electronic devices are developing in the direction of more miniaturization and precision, and the requirements of chip integration are also increasing. The surface quality of silicon wafer is a key factor in the process of manufacturing high-performance chips. Chemical mechanical polishing has become the main technical means to achieve global nano-level planarization, through the mechanical and chemical synergy to achieve high polishing rate and polishing accuracy. Cerium oxide-based polishing powder can form Ce-O-Si bond with the surface of the workpiece to be polished due to the conversion characteristic of Ce³⁺ to Ce⁴⁺ on the surface of cerium oxide-based polishing powder, and thus exhibits a very high chemical polishing activity on silicon-based materials. Therefore, cerium oxide-based polishing powder is widely used in the chemical-mechanical polishing of shallow trench isolation (STI) layers in integrated circuits.

The factors affecting the polishing powder properties comprise particle size, morphology, hardness and Ce³⁺ content on the surface. The polishing rate of micron-sized or sub-micron-sized polishing powder is fast, but the scratches on the workpiece surface are more. The nano-scale cerium oxide can reduce the scratches on the surface of the workpiece after polishing, but the polishing rate slightly decreases. Meanwhile, because of the increase of its specific surface area, it is easy to agglomerate and difficult to disperse in the process of preparing the polishing slurry, resulting in the dish-shaped defects easily generated in the polishing process. At present, the new structure of cerium oxide has attracted extensive attention. For example, self-assembled cerium oxide has attracted much attention due to its higher specific surface area and Ce³⁺ content, but it is easy to break during polishing process, which results in the short service life and low recycling rate of polishing powder. Because of its pore structure, the Young's modulus of porous cerium oxide is lower than that of ordinary cerium oxide, so it has less stress concentration and better energy absorption and buffering performance, reduces the probability of self-breakage during the polishing process, prolongs the life of polishing powder and reduces the damage to the workpiece surface, but its polishing rate will be reduced.

### Summary of the Invention

### (1) OBJECTS OF THE INVENTION

An object of the present invention is to provide a cerium oxide-based polishing powder with an increased content of trivalent cerium on the surface, which is not easily broken, is advantageous in improving the polishing rate and polishing accuracy, and prolongs the service life, and a preparation method, a polishing solution and a use thereof.

### (2) TECHNICAL SCHEME

In order to solve the above problems, the present invention provides a cerium oxide-based polishing powder comprising porous secondary particles assembled from a plurality of primary grains, wherein the primary grains have a pore diameter of 2 to 30 nm, a pore volume of 0.10 to 0.50 cm³/g, a specific surface area of 10 to 80 m²/g, and the content of trivalent cerium at the surface accounts for 10% to 40% of the total content of cerium at the surface.

In another aspect of the present invention, it is preferable that the primary grains have a pore diameter of 5 to 20 nm, a pore volume of 0.15 to 0.45 cm³/g, a specific surface area of 25 to 60 m²/g, and the content of trivalent cerium at the surface accounts for 15% to 40% of the total content of cerium at the surface.

In another aspect of the present invention, it is preferable that the secondary particle morphology of the cerium oxide-based polishing powder comprises at least one selected from rod-like, spherical, and triangular morphology.

In another aspect of the present invention, it is preferable that the porous secondary particles have a particle size of 50 to 800 nm.

In another aspect of the present invention, it is preferable that the chemical formula of the cerium oxide-based polishing powder is Ce₁₋ₓMₓO_{y}, wherein 0 ≤ x ≤ 0.4, 1 < y ≤ 2.0; the element M in the formula comprises at least one selected from a transition metal, an alkaline earth metal, aluminum, silicon, an alkali metal and a rare earth element other than cerium.

In another aspect of the present invention, it is preferable that the M comprises at least one selected from lanthanum, praseodymium, neodymium, samarium, europium, gadolinium, terbium, dysprosium, thulium, ytterbium, yttrium, zirconium, iron, magnesium, sodium, calcium, and silicon.

In another aspect of the present invention, it is preferable that the main body of the crystal structure of the cerium oxide-based polishing powder is a cubic fluorite structure.

In another aspect of the present invention, it is preferable that a preparation method for a cerium oxide-based polishing powder for preparing the cerium oxide-based polishing powder as described above, comprises the steps of:
S101, uniformly mixing a first solution and a second solution in a proportion and in a pre-set mixing mode to obtain a precipitate slurry; the first solution comprises a cerium salt and an M salt, and the second solution comprises a precipitant; wherein the ratio of the first solution to the second solution is 1: 2.5 to 6.5;
S201, after aging or hydrothermal treatment of the precipitate slurry for a pre-set time, performing solid-liquid separation to obtain a first solid;
S301, drying the first solid to obtain a second solid; and
S401, calcining the second solid under a calcining atmosphere to obtain a cerium oxide-based polishing powder.

In another aspect of the present invention, it is preferable that the cerium salt and the M salt in the step S101 comprise at least one selected from sulfate, chloride, nitrate, citrate, and acetate; the total concentration of the cerium salt and the M salt in the first solution is 0.05 mol/L to 1.20 mol/L.

In another aspect of the present invention, it is preferable that the precipitant in the step S101 comprises at least one selected from sodium hydroxide, potassium hydroxide, ammonium carbonate, ammonium bicarbonate, sodium carbonate, sodium bicarbonate, ammonia water, hydrazine hydrate, tetramethylammonium hydroxide, and urea; the precipitant concentration in the second solution is 0.10 mol/L to 6.00 mol/L.

In another aspect of the present invention, it is preferable that the pre-set mixing mode in the step S101 comprises: mixing manner, mixing temperature and pH value of mixing process;
the mixing manner at least comprises one of a high-speed stirring manner, a high-speed ball milling manner, a high-gravity manner, an ultrasonic manner, a microwave oscillation manner and a centrifugal manner;
the mixing temperature is 5 to 95 °C; and
a pH value of the mixing process is 4.5 to 10.0.

In another aspect of the present invention, it is preferable that the aging or hydrothermal treatment temperature in the step S201 is 60 to 230 °C, and the aging or hydrothermal treatment time is 1 to 48 hours.

In another aspect of the present invention, it is preferable that the drying temperature in the step S301 is 50 to 100 °C; and the drying time is 4 to 24 h.

In another aspect of the present invention, it is preferable that the calcining temperature in the step S401 is 400 to 1000 °C and the calcining time is 2 to 10 h.

In another aspect of the present invention, it is preferable that the calcining atmosphere in the step S401 is an oxidizing atmosphere or a reducing atmosphere; the oxidizing atmosphere comprises at least one selected from oxygen and air; the reducing atmosphere comprises at least one selected from H₂, NH₃, and CO.

In another aspect of the present invention, it is preferable that a polishing solution comprises the cerium oxide-based polishing powder as described above or the cerium oxide-based polishing powder prepared by the preparation method as described above.

In another aspect of the present invention, it is preferable that the polishing solution further comprises a dispersant, a pH adjuster, and water; wherein the content of the cerium oxide-based polishing powder is less than or equal to 20% by weight of the total weight of the polishing solution; the content of the dispersant is less than or equal to 5% by weight of the total weight of the polishing solution; the polishing solution has a pH in the range of 4 to 10.

In another aspect of the present invention, it is preferable that the dispersant comprises at least one selected from sodium hexametaphosphate, sodium pyrophosphate, ethyl silicate, sodium lauryl sulfate, carboxymethyl cellulose, polyacrylamide, and polyethylene glycol.

In another aspect of the present invention, it is preferable that use of the cerium oxide-based polishing powder as described above, the cerium oxide-based polishing powder prepared by the preparation method as described above, or the polishing solution as described above in the field of plate glass, mobile phone cover plate glass, optical glass, liquid crystal display glass, glass substrates and integrated circuits.

### (3) ADVANTAGEOUS EFFECTS

The above-mentioned technical solution of the present invention has the following advantageous technical effects:
The microstructure of the cerium oxide-based polishing powder of the present invention is porous cerium oxide-based particles assembled from nano primary particles, and the self-assembled structure enables the cerium oxide-based particles to have a higher surface trivalent cerium content and a higher specific surface area at the same time, which is beneficial to obtaining a higher polishing rate; the sub-micron particle size improves its dispersibility in the polishing slurry; the porous structure reduces its Young's modulus, makes it not easy to break during the polishing process, improves the surface accuracy of the workpiece after polishing and prolongs the life of the polishing powder. Therefore, the cerium oxide-based polishing powder provided by the present invention has both excellent polishing rate and polishing accuracy and has a long service life.

### Brief Description of the Drawings

FIG. 1 is a scanning electron microscope (SEM) image of cerium oxide nanoparticles according to example 1 of the present invention; and
FIG. 2 is a surface profile view of glass polished with cerium oxide nanoparticles according to Example 5 of the present invention.

### Detailed Description of the Invention

In order to make the objects, technical solutions and advantages of the present invention more apparent, a more particular description of the present invention will be rendered in conjunction with specific embodiments and with reference to the accompanying drawings. It should be understood that this description is made only by way of example and not as a limitation on the scope of the present invention. Further, in the following description, descriptions of well-known structures and techniques are omitted so as to not unnecessarily obscure the concepts of the present invention.

The described examples are some, but not all examples of the present invention. Based on the examples of the present invention, all other examples obtained by persons skilled in the art without inventive effort fall within the protection scope of the present invention.

In describing the present invention, it should be noted that the terms "first", "second", and "third" are used for descriptive purposes only and are not to be construed as indicating or implying relative importance.

Furthermore, the technical features described below in connection with the different embodiments of the present invention may be combined with each other as long as they do not conflict with each other.

### Example 1

A cerium oxide-based polishing powder, the cerium oxide-based polishing powder comprising porous secondary particles assembled from a plurality of primary grains, wherein the primary grains having a particle size of 8 to 80 nm, a pore diameter of 2 to 30 nm, a pore volume of 0.10 to 0.50 cm³/g, a specific surface area of 10 to 80 m²/g, and the content of trivalent cerium at the surface accounts for 10% to 40% of the total content of cerium at the surface; furthermore, in the example, the primary grains having a particle size of 15 to 50 nm, a pore diameter of 5 to 20 nm, and a pore volume of 0.15 to 0.45 cm³/g, a specific surface area of 25 to 60 m²/g, and the content of trivalent cerium at the surface accounts for 15% to 40% of the total content of cerium at the surface; the secondary particle morphology of the cerium oxide-based polishing powder comprises at least one selected from rod-like, spherical and triangular morphology; the porous secondary particles have a particle size of 50 to 800 nm, furthermore, in the example, the porous secondary particles have a particle size of 100 to 500 nm; the chemical formula of the cerium oxide-based polishing powder is Ce₁₋ₓMₓO_{y}, wherein 0 ≤ x ≤ 0.4, 1 < y ≤ 2.0; the element M in the formula comprises at least one selected from a transition metal, an alkaline earth metal, aluminum, silicon, an alkali metal and a rare earth element other than cerium; furthermore, in the example, the M comprises at least one selected from lanthanum, praseodymium, neodymium, samarium, europium, gadolinium, terbium, dysprosium, thulium, ytterbium, yttrium, zirconium, iron, magnesium, sodium, calcium, and silicon; the main body of the crystal structure of the cerium oxide-based polishing powder is a cubic fluorite structure.

The microstructure of the cerium oxide-based polishing powder of the example was porous cerium oxide-based particles assembled from nano primary particles. The self-assembled structure enables the cerium oxide-based particles to have a higher surface Ce³⁺ content and a higher specific surface area at the same time, which is beneficial to obtaining a higher polishing rate; the sub-micron particle size improves its dispersibility in the polishing slurry; the porous structure reduces its Young's modulus, makes it not easy to break during the polishing process, improves the surface accuracy of the workpiece after polishing and prolongs the life of the polishing powder. Therefore, the cerium oxide-based polishing powder provided by the present invention has both excellent polishing rate and polishing accuracy and has a long service life.

### Example 2

A preparation method for a cerium oxide-based polishing powder for preparing the cerium oxide-based polishing powder according to example 1, comprises the steps of:
S101, a first solution and a second solution are uniformly mixed in a proportion and in a pre-set mixing mode to obtain a precipitate slurry; the first solution comprises a cerium salt and an M salt, and the second solution comprises a precipitant; the ratio of the first solution to the second solution is 1: 2.5 to 6.5;
wherein the cerium salt and the M salt comprise at least one selected from sulfate, chloride, nitrate, citrate, and acetate; the total concentration of the cerium salt and the M salt in the first solution is 0.05 mol/L to 1.20 mol/L, and optionally, in the example, the total concentration of the cerium salt and the M salt in the first solution is 0.10 mol/L to 0.60 mol/L;
the precipitant comprises at least one selected from sodium hydroxide, potassium hydroxide, ammonium carbonate, ammonium bicarbonate, sodium carbonate, sodium bicarbonate, ammonia water, hydrazine hydrate, tetramethylammonium hydroxide, and urea; the precipitant concentration in the second solution is 0.10 mol/L to 6.00 mol/L, and optionally, in the example, the concentration of the precipitant in the second solution is 0.30 mol/L to 4.00 mol/L;
the pre-set mixing mode comprises: mixing manner, mixing temperature and pH value of mixing process;
the mixing manner at least comprises one of a high-speed stirring manner, a high-speed ball milling manner, a high-gravity manner, an ultrasonic manner, a microwave oscillation manner and a centrifugal manner;
the mixing temperature is 5 to 95 °C; furthermore, in the example, the mixing temperature is 40 to 80 °C;
the pH value of the mixing process is 4.5 to 10.0, and furthermore, in the example, the pH value of the mixing process is 5.0 to 8.0;
S201, after aging or hydrothermal treatment of the precipitate slurry for a pre-set time, solid-liquid separation is performed to obtain a first solid; the aging or hydrothermal treatment temperature is 60 to 230 °C, and furthermore, in the example, the aging or hydrothermal treatment temperature is 80 to 180 °C; the aging or hydrothermal treatment time is 1 to 48 h, and furthermore, in the example, the aging or hydrothermal treatment time is 1 to 24 h;
S301, the first solid is dried to obtain a second solid, wherein the drying temperature is 50 to 100 °C; the drying time is 4 to 24 h, furthermore, in the example, the drying time is 8 to 20 h;
S401, the second solid is calcined under a calcining atmosphere to obtain a cerium oxide-based polishing powder; the calcining temperature is 400 to 1000 °C, furthermore, in the example, the calcining temperature is 500 to 900 °C, and the calcination time is 2 to 10 h, furthermore, in the example, the calcination time is 2 to 6 h; the calcining atmosphere is an oxidizing atmosphere or a reducing atmosphere; the oxidizing atmosphere comprises at least one selected from oxygen and air; the reducing atmosphere comprises at least one selected from H₂, NH₃, and CO.

In the example, by the above preparation method, the cerium oxide-based polishing powder having a porous self-assembled structure of example 1 can be obtained, a soluble cerium salt and a precipitant are mixed with high-speed shearing, and the agglomerated secondary particles continue to be dispersed under the shearing force, thus reducing the aggregation and growth process of the primary nanoparticles. By controlling the reaction temperature, pH and other relevant conditions, the primary nanoparticles are self-assembled into rod-like, spherical and triangular morphology along different directions. Porous self-assembled cerium oxide-based polishing powders with different pore diameters and pore volumes are obtained by calcining method based on the morphology inheritance between carbonate and its oxide. Finally, the porous cerium oxide-based polishing powder self-assembled from the primary nanoparticles is obtained by high-speed shearing, pH, temperature and other precipitation and hydrothermal conditions without using additives.

### Example 3

A polishing solution, comprising the cerium oxide-based polishing powder as described in example 1 or the cerium oxide-based polishing powder prepared by the preparation method of example 2; further comprising a dispersant, a pH adjuster, and water; wherein the content of the cerium oxide-based polishing powder is less than or equal to 20% by weight of the total weight of the polishing solution; the content of the dispersant is less than or equal to 5% by weight of the total weight of the polishing solution; the polishing solution has a pH in the range of 4 to 10.

The dispersant comprises at least one selected from sodium hexametaphosphate, sodium pyrophosphate, ethyl silicate, sodium lauryl sulfate, carboxymethyl cellulose, polyacrylamide, and polyethylene glycol.

### Example 4

Use of the cerium oxide-based polishing powder as described in example 1, the cerium oxide-based polishing powder prepared in example 2 or the polishing solution as described in example 3 in the fields of plate glass, mobile phone cover plate glass, optical glass, liquid crystal display glass, glass substrates and integrated circuits.

### Example 5

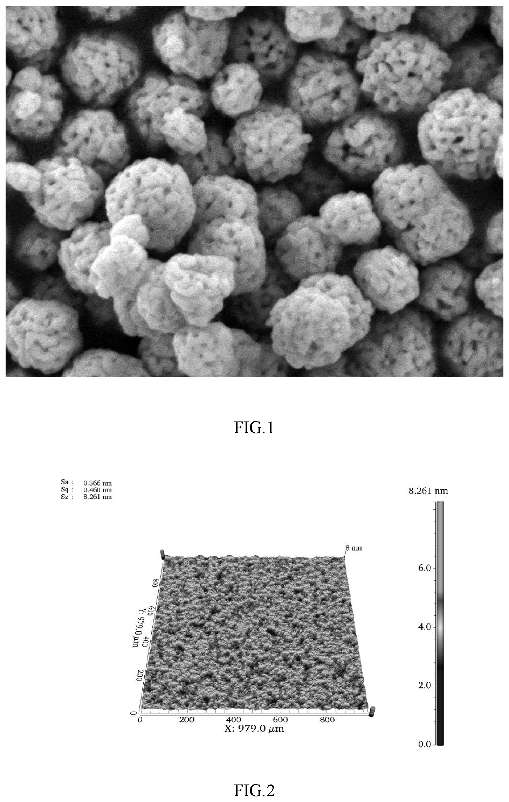

In the example, a chlorine salt, specifically cerium chloride, lanthanum chloride and praseodymium chloride in the chlorine salt are used; a 0.6 mol/L cerium chloride, lanthanum chloride and praseodymium chloride solution and a 1.2 mol/L ammonium bicarbonate solution are mixed at a ratio of 1: 2.5 in a water bath of 65 °C to obtain a precipitate slurry; the pH is adjusted to 6; the precipitate slurry is mixed uniformly with stirring at a speed of 400 rpm, and hydrothermally heated at 100 °C for 24 h. The product after hydrothermal treatment was filtered, washed, and dried at 100 °C for 12 h. The dried product is calcined at 600 °C in a nitrogen atmosphere, and after maintaining the temperature for 6 h, a porous cerium oxide-based rare earth polishing powder assembled by primary nanoparticles is obtained, the scanning electron microscope image thereof is as shown in FIG. 1, and the chemical formula thereof is Ce_{0.6}La_{0.2}Pr_{0.2}O₂.

The cerium-based rare earth polishing powder prepared according to the process parameters of example 5 is formulated into a polishing slurry with a mass concentration of 1 wt% using deionized water, 1 wt% of sodium hexametaphosphate is added as a dispersant, and the pH is adjusted to 6.

### Example 6

In the example, a chlorine salt, specifically cerium chloride in the chlorine salt is used; a 0.6 mol/L cerium chloride solution and a 1.2 mol/L ammonium bicarbonate solution are mixed at a ratio of 1: 6.5 in a water bath of 60 °C to obtain a precipitate slurry; the pH is adjusted to 6; the precipitate slurry is ball-milled, stirred and mixed uniformly, and hydrothermally heated at 120 °C for 1 h. The product after hydrothermal treatment was filtered, washed, and dried at 100 °C for 12 h. The dried product is calcined at 800 °C in an air atmosphere, and after maintaining the temperature for 4 h, a porous cerium oxide-based rare earth polishing powder assembled by primary nanoparticles is obtained, and the chemical formula thereof is CeO₂.

The cerium-based rare earth polishing powder prepared according to the process parameters of example 6 is formulated into a polishing slurry with a mass concentration of 4 wt% using deionized water, 3 wt% of carboxymethyl cellulose is added as a dispersant, and the pH is adjusted to 8.

### Example 7

In the example, nitrate salt, specifically cerium nitrate in nitrate salt is used; a 0.1 mol/L cerium nitrate solution and a 0.3 mol/L ammonium carbonate solution are mixed at a ratio of 1: 3 in a water bath of 45 °C to obtain a precipitate slurry; the pH is adjusted to 8; the precipitate slurry is ultrasonic mixed uniformly, and hydrothermally heated at 140 °C for 12 h. The product after hydrothermal treatment was filtered, washed, and dried at 80 °C for 24 h. The dried product is calcined at 700 °C in an oxygen atmosphere, and after maintaining the temperature for 8 h, a porous cerium oxide-based rare earth polishing powder assembled by primary nanoparticles is obtained, and the chemical formula thereof is CeO₂.

The cerium-based rare earth polishing powder prepared according to the process parameters of example 7 is formulated into a polishing slurry with a mass concentration of 8 wt% using deionized water, 2 wt% of sodium pyrophosphate is added as a dispersant, and the pH is adjusted to 10.

### Example 8

The difference from example 7 is that after mixing according to a certain stoichiometric ratio to obtain a precipitate slurry, the pH value is adjusted to 10, a rare earth polishing powder with the chemical formula of CeO₂ is finally obtained.

### Example 9

In the example, sulphate salts, specifically cerium sulphate, lanthanum sulphate and neodymium sulphate in the sulphate salts are used, a 0.3 mol/L cerium sulphate, lanthanum sulphate and neodymium sulphate solution and a 0.9 mol/L sodium bicarbonate solution are mixed at a ratio of 1: 4 in a water bath of 45 °C to obtain a precipitate slurry; the pH is adjusted to 7; the precipitate slurry is ultrasonic mixed uniformly, and hydrothermally heated at 160 °C for 48 h. The product after hydrothermal treatment was filtered, washed, and dried at 60 °C for 20 h. The dried product is calcined at 700 °C in an air atmosphere, and after maintaining the temperature for 10 h, a porous cerium oxide-based rare earth polishing powder assembled by primary nanoparticles is obtained, and the chemical formula thereof is Ce_{0.8}La_{0.1}Nd_{0.1}O₂.

The cerium-based rare earth polishing powder prepared according to the process parameters of example 9 is formulated into a polishing slurry with a mass concentration of 16 wt% using deionized water, and 4 wt% of sodium lauryl sulfate is added as a dispersant, and the pH is adjusted to 4.

### Example 10

In the example, acetate salts, specifically cerium acetate and neodymium acetate in the acetate salts are used, a 0.1 mol/L cerium acetate, and neodymium acetate solution and a 0.1 mol/L urea solution are mixed at a ratio of 1: 5 in a water bath at 45 °C to obtain a precipitate slurry; the pH is adjusted to 5; the precipitate slurry is uniformly mixed by microwave oscillation, and hydrothermally heated at 200 °C for 36 h. The product after hydrothermal treatment was filtered, washed, and dried at 100 °C for 4 h. The dried product is calcined at 600 °C in an air atmosphere, and after maintaining the temperature for 10 h, a porous cerium oxide-based rare earth polishing powder assembled by primary nanoparticles is obtained, and the chemical formula thereof is Ce_{0.8}Nd_{0.2}O₂.

The cerium-based rare earth polishing powder prepared according to the process parameters of example 10 is formulated into a polishing slurry with a mass concentration of 20 wt% using deionized water, 5 wt% of ethyl silicate is added as a dispersant, and the pH is adjusted to 10.

### Example 11

The difference from example 10 is that the dried product is calcined at 500 °C in an air atmosphere, and after maintaining the temperature for 10 h, a rare earth polishing powder with the chemical formula of CeO₂ is finally obtained.

### Example 12

The difference from example 2 is that the dried product is calcined at 500 °C in an air atmosphere, and after maintaining the temperature for 10 h, a rare earth polishing powder with the chemical formula of CeO₂ is finally obtained.

### Example 13

In the example, a citrate salt, specifically cerium citrate in the citrate salt is used; a 0.6 mol/L cerium citrate solution and a 3.6 mol/L potassium hydroxide solution are mixed at a ratio of 1: 6 in a water bath of 95 °C to obtain a precipitate slurry; the pH is adjusted to 4.5; the precipitate slurry is stirred and mixed uniformly, and hydrothermally heated at 180 °C for 12 h. The product after hydrothermal treatment was filtered, washed, and dried at 100 °C for 16 h. The dried product is calcined at 1000 °C in an air atmosphere, and after maintaining the temperature for 10 h, a porous cerium oxide-based rare earth polishing powder assembled by primary nanoparticles is obtained, and the chemical formula thereof is CeO₂.

The cerium-based rare earth polishing powder prepared according to the process parameters of example 13 is formulated into a polishing slurry with a mass concentration of 0.5 wt% using deionized water, 1 wt% of carboxymethyl cellulose is added as a dispersant, and the pH is adjusted to 10.

### Example 14

The difference from example 12 is that the dried product is calcined at 400 °C in an air atmosphere, and after maintaining the temperature for 10 h, a rare earth polishing powder with the chemical formula of CeO₂ is finally obtained.

### Example 15

In the example, a chloride salt, specifically cerium chloride in the chloride salt is used; a 1.2 mol/L cerium chloride solution and a 2.4 mol/L ammonia water are mixed at a ratio of 1: 5.5 in a water bath at 25 °C to obtain a precipitate slurry; the pH is adjusted to 6; the precipitate slurry is mixed uniformly by centrifugation, and hydrothermally heated at 230 °C for 6 h. The product after hydrothermal treatment was filtered, washed, and dried at 90 °C for 12 h. The dried product is calcined at 900 °C in an air atmosphere, and after maintaining the temperature for 8 h, a porous cerium oxide-based rare earth polishing powder assembled by primary nanoparticles is obtained, and the chemical formula thereof is CeO₂.

The cerium-based rare earth polishing powder prepared according to the process parameters of example 15 is formulated into a polishing slurry with a mass concentration of 0.1 wt% using deionized water, 0.1 wt% of polyacrylamide is added as a dispersant, and the pH is adjusted to 10.

### Example 16

The difference from example 15 is that a 1.2 mol/L cerium chloride solution and a 2.4 mol/L ammonia water are mixed according to a certain stoichiometric ratio in a water bath of 95 °C to obtain a precipitate slurry, and a rare earth polishing powder with the chemical formula of CeO₂ is finally obtained.

### Example 17

In the example, nitrate salts, specifically cerium nitrate, lanthanum nitrate and praseodymium nitrate in the nitrate salts are used; a 0.9 mol/L cerium nitrate, lanthanum nitrate and praseodymium nitrate solution and 5.0 mol/L ammonia water are mixed at a ratio of 1: 4.5 in a water bath of 65 °C to obtain a precipitate slurry; the pH is adjusted to 10; the precipitate slurry is ultrasonic mixed uniformly, and hydrothermally heated at 140 °C for 12 h. The product after hydrothermal treatment was filtered, washed, and dried at 70 °C for 12 h. The dried product is calcined at 700 °C in a nitrogen atmosphere, and after maintaining the temperature for 8 h, a porous cerium oxide-based rare earth polishing powder assembled by primary nanoparticles is obtained, and the chemical formula thereof is Ce_{0.8}La_{0.1}Pr_{0.1}O₂.

The cerium-based rare earth polishing powder prepared according to the process parameters of example 17 is formulated into a polishing slurry with a mass concentration of 12 wt% using deionized water, 5 wt% of polyethylene glycol amine is added as a dispersant, and the pH is adjusted to 10.

### Example 18

The difference from example 17 is that a 1.2 mol/L cerium nitrate, lanthanum nitrate, praseodymium nitrate solution and 6.0 mol/L ammonia water are mixed at a ratio of 1: 4 in a water bath of 65 °C to obtain a precipitate slurry, and a rare earth polishing powder with the chemical formula of CeO₂ is finally obtained.

### Example 19

In the example, a chloride salt, specifically cerium chloride in the chloride salt is used; a 0.05 mol/L cerium chloride solution and a 0.1 mol/L ammonium bicarbonate solution are mixed according to a certain stoichiometric ratio in a water bath of 60 °C to obtain a precipitate slurry; the pH is adjusted to 7; the precipitate slurry is mixed uniformly by high gravity, and hydrothermally heated at 120 °C for 30 h. The product after hydrothermal treatment was filtered, washed, and dried at 100 °C for 8 h. The dried product is calcined at 800 °C in an ammonia gas atmosphere, and after maintaining the temperature for 4 h, a porous cerium oxide-based rare earth polishing powder assembled by primary nanoparticles is obtained, and the chemical formula thereof is CeO₂.

The cerium-based rare earth polishing powder prepared according to the process parameters of example 19 is formulated into a polishing slurry with a mass concentration of 1 wt% using deionized water, 1 wt% of sodium hexametaphosphate is added as a dispersant, and the pH is adjusted to 10.

### Example 20

In the example, nitrate salt, specifically cerium nitrate in nitrate salt is used; a 0.6 mol/L cerium nitrate solution and 1.2 mol/L ammonium bicarbonate solution are mixed at a ratio of 1: 3.4 in a water bath of 5 °C to obtain a precipitate slurry; the pH is adjusted to 7; the precipitate slurry is ball-milled and mixed uniformly, and aged at 60 °C for 42 h. The product after hydrothermal treatment was filtered, washed, and dried at 700 °C for 16 h. The dried product is calcined at 800 °C in an ammonia gas atmosphere, and after maintaining the temperature for 4 h, a porous cerium oxide-based rare earth polishing powder assembled by primary nanoparticles is obtained, and the chemical formula thereof is CeO₂.

The cerium-based rare earth polishing powder prepared according to the process parameters of example 20 is formulated into a polishing slurry with a mass concentration of 15 wt% using deionized water, 5 wt% of carboxymethyl cellulose is added as a dispersant, and the pH is adjusted to 10.

### Example 21

The difference from Example 20 is that the precipitate slurry is ball-milled uniformly and aged at 80 °C for 42 h. Finally, a rare earth polishing powder having a chemical formula of CeO₂ is obtained.

### Example 22

The difference from Example 20 is that the precipitate slurry is mixed uniformly by high gravity and aged at 80 °C for 42 h. Finally, a rare earth polishing powder having a chemical formula of CeO₂ is obtained.

### Example 23

The difference from Example 20 is that the precipitate slurry is mixed uniformly by high gravity and aged at 80 °C for 30 h. Finally, a rare earth polishing powder having a chemical formula of CeO₂ is obtained.

### Example 24

The difference from Example 20 is that the precipitate slurry is mixed uniformly by high gravity and aged at 80 °C for 18 h. Finally, a rare earth polishing powder having a chemical formula of CeO₂ is obtained.

### Example 25

In the example, a chloride salt, specifically cerium chloride and lanthanum chloride in the chloride salt are used; a 0.6 mol/L cerium chloride and lanthanum chloride solution and a 1.2 mol/L ammonium bicarbonate solution are mixed at a ratio of 1: 4.8 in a water bath of 65 °C to obtain a precipitate slurry; the pH is adjusted to 6; the precipitate slurry is stirred and mixed uniformly at a speed of 400 rpm, and hydrothermally heated at 100 °C for 24 h. The product after hydrothermal treatment was filtered, washed, and dried at 50 °C for 8 h. The dried product is calcined at 900 °C in an air atmosphere, and after maintaining the temperature for 6 h, a porous cerium oxide-based rare earth polishing powder assembled by primary nanoparticles is obtained, and the chemical formula thereof is Ce_{0.8}La_{0.2}O₂.

The cerium-based rare earth polishing powder prepared according to the process parameters of example 25 is formulated into a polishing slurry with a mass concentration of 1 wt% using deionized water, 1 wt% of sodium hexametaphosphate is added as a dispersant, and the pH is adjusted to 10.

### Example 26

The difference from example 25 is that the dried product is calcined at 900 °C in a hydrogen atmosphere, and after maintaining the temperature for 6 h, a porous cerium oxide-based rare earth polishing powder assembled by primary nanoparticles is obtained, and the chemical formula thereof is Ce_{0.8}La_{0.2}O₂.

### Example 27

The difference from example 25 is that the dried product is calcined at 900 °C in a carbon monoxide atmosphere, and after maintaining the temperature for 6 h, a porous cerium oxide-based rare earth polishing powder assembled from primary nanoparticles is finally obtained, and the chemical formula thereof is Ce_{0.8}La_{0.2}O₂.

### Example 28

The difference from example 6 is that a 0.6 mol/L cerium chloride, a praseodymium chloride solution and a 1.2 mol/L ammonium bicarbonate solution are mixed at a ratio of 1: 6 in a water bath of 65 °C to obtain a precipitate slurry, and a rare earth polishing powder with the chemical formula of Ce_{0.8}Pr_{0.2}O₂ is finally obtained.

### Example 29

The difference from example 6 is that 0.6 mol/L cerium nitrate, zirconium nitrate solution and 1.2 mol/L ammonium bicarbonate solution are mixed at a ratio of 1: 4.2 in a water bath of 65 °C to obtain a precipitate slurry, and a rare earth polishing powder with the chemical formula of Ce_{0.8}Zr_{0.2}O₂ is finally obtained.

### Example 30

The difference from example 6 is that 0.6 mol/L cerium nitrate, zirconium nitrate solution and 1.2 mol/L ammonium bicarbonate solution are mixed at a ratio of 1: 5 in a water bath of 65 °C to obtain a precipitate slurry, and a rare earth polishing powder with the chemical formula of Ce_{0.9}Zr_{0.1}O₂ is finally obtained.

### Example 31

The difference from example 6 is that a 0.6 mol/L cerium nitrate, yttrium nitrate and zirconium nitrate solution and a 1.2 mol/L ammonium bicarbonate solution are mixed at a ratio of 1: 6.2 in a water bath of 65 °C to obtain a precipitate slurry, and a rare earth polishing powder with the chemical formula of Ce_{0.8}Y_{0.1}Zr_{0.1}O₂ is finally obtained.

### Example 32

The difference from example 6 is that 0.6 mol/L cerium nitrate, yttrium nitrate solution and 1.2 mol/L ammonium bicarbonate solution are mixed at a ratio of 1: 2.7 in a water bath at 65 °C to obtain a precipitate slurry, and a rare earth polishing powder with the chemical formula of Ce_{0.9}Y_{0.1}O₂ is finally obtained.

The D50 particle size of the rare earth polishing powder obtained in Examples 5 to 32 is measured by a dynamic laser particle size analyzer, the content of trivalent cerium on the surface is measured by X-ray photoelectron spectroscopy, and the specific surface area and pore volume are measured by a nitrogen adsorption-desorption instrument. The morphology, primary particle size and pore diameter are measured by scanning electron microscopy.

The test data and the chemical formula of the rare earth polishing powder are shown in Table 1.

**Table 1 Polishing powder data obtained in Examples 5 to 32**

| Example | Rare earth polishing powder Chemical formula | Surface trivalent cerium content (%) | Specific surface area (m2/g) | D50 particle size (nm) | Primary particle size (nm) | Pore diameter (nm) | Pore volume (cm3/g) |
|---|---|---|---|---|---|---|---|
| Example 5 | Ce0.6La0.2Pr0.2O2 | 40 | 55 | 620 | 80 | 12 | 0.16 |
| Example 6 | CeO2 | 26 | 43 | 480 | 30 | 30 | 0.29 |
| Example 7 | CeO2 | 33 | 35 | 800 | 32 | 20 | 0.45 |
| Example 8 | CeO2 | 10 | 26 | 670 | 45 | 25 | 0.50 |
| Example 9 | Ce0.8La0.1Nd0.1O2 | 32 | 49 | 700 | 50 | 17 | 0.37 |
| Example 10 | Ce0.8Nd0.2O2 | 36 | 60 | 590 | 37 | 16 | 0.29 |
| Example 11 | CeO2 | 22 | 65 | 560 | 42 | 10 | 0.32 |
| Example 12 | CeO2 | 24 | 70 | 570 | 48 | 17 | 0.23 |
| Example 13 | CeO2 | 33 | 80 | 50 | 8 | 2 | 0.10 |
| Example 14 | CeO2 | 26 | 30 | 70 | 16 | 4 | 0.13 |
| Example 15 | CeO2 | 27 | 10 | 100 | 19 | 5 | 0.15 |
| Example 16 | CeO2 | 33 | 15 | 170 | 21 | 7 | 0.16 |
| Example 17 | CeO2 | 15 | 23 | 245 | 24 | 10 | 0.16 |
| Example 18 | Ce0.8La0.1Pr0.1O2 | 18 | 28 | 69 | 15 | 3 | 0.10 |
| Example 19 | CeO2 | 36 | 32 | 270 | 30 | 6 | 0.11 |
| Example 20 | CeO2 | 27 | 43 | 360 | 32 | 5 | 0.12 |
| Example 21 | CeO2 | 10 | 29 | 650 | 38 | 14 | 0.23 |
| Example 22 | CeO2 | 35 | 54 | 480 | 39 | 17 | 0.17 |
| Example 23 | CeO2 | 32 | 62 | 390 | 34 | 24 | 0.20 |
| Example 24 | CeO2 | 38 | 34 | 350 | 36 | 19 | 0.16 |
| Example 25 | Ce0.8La0.2O2 | 22 | 45 | 500 | 42 | 26 | 0.27 |
| Example 26 | Ce0.8La0.2O2 | 27 | 38 | 520 | 41 | 10 | 0.45 |
| Example 27 | Ce0.8La0.2O2 | 28 | 25 | 480 | 39 | 24 | 0.23 |
| Example 28 | Ce0.8Pr0.2O2 | 15 | 19 | 420 | 34 | 12 | 0.28 |
| Example 29 | Ce0.8Zr0.2O2 | 26 | 26 | 290 | 37 | 21 | 0.19 |
| Example 30 | Ce0.9Zr0.1O2 | 35 | 46 | 130 | 17 | 5 | 0.14 |
| Example 31 | Ce0.8Y0.1Zr0.1O2 | 25 | 38 | 720 | 47 | 30 | 0.40 |
| Example 32 | Ce0.9Y0.1O2 | 28 | 57 | 650 | 42 | 20 | 0.36 |

The microstructure of the cerium oxide-based polishing powder in the above examples is porous cerium oxide-based particles assembled from nano primary particles, and the self-assembled structure enables the cerium oxide-based particles to have a higher surface Ce³⁺ content and a higher specific surface area at the same time, which is beneficial to obtaining a higher polishing rate.

### Application Examples 5 to 32

The polishing slurries formulated in examples 5 to 32 are respectively taken. The prepared rare earth polishing slurry is used to polish K9 glass (80 mm x 100 mm x 0.5 mm) or silicon oxide wafer (4 inches in diameter) at a polishing pressure of 4.95 psi, a polishing pad rotation speed of 90 rpm/min and a carrier rotation speed of 40 mL/min, respectively, for a polishing duration of 10 min and at a polishing slurry flow rate of 50 mL/min. The polishing rate is measured, and the surface roughness Sa of the glass before and after polishing is measured by a non-contact surface profilometer. The polishing slurry is circulated for the number of cycles at which the polishing rate is reduced to 80% of the initial polishing rate, and the test results are shown in Table 2. The white light interference image of the polished K9 glass of Example 5 is shown in FIG. 2, where Sa is the arithmetic mean height of the surface, which represents the roughness of the surface, Sq is the root mean square height, and Sz is the maximum height.

**Table 2 Polishing data of polishing slurries formulated in example 5 to 32**

| Application Examples | Polishing sample | Polishing Rate (nm/min) | Glass surface roughness Sa (nm) | | Number of Cycles (Cycles) |
|---|---|---|---|---|---|
| | | | Before polishing | After polishing | |
| Application Example 5 | K9 Glass | 729 | 1.232 | 0.545 | 57 |
| Application Example 6 | Silicon oxide | 430 | 0.532 | 0.437 | 43 |
| Application Example 7 | K9 Glass | 685 | 1.321 | 0.538 | 49 |
| Application Example 8 | K9 Glass | 1092 | 1.093 | 0.829 | 46 |
| Application Example 9 | K9 Glass | 875 | 1.125 | 0.442 | 52 |
| Application Example 10 | K9 Glass | 795 | 1.309 | 0.733 | 52 |
| Application Example 11 | K9 Glass | 700 | 1.204 | 0.563 | 32 |
| Application Example 12 | Silicon oxide | 467 | 0.563 | 0.532 | 56 |
| Application Example 13 | Silicon oxide | 310 | 0.457 | 0.623 | 54 |
| Application Example 14 | Silicon oxide | 420 | 0.579 | 0.833 | 47 |
| Application Example 15 | Silicon oxide | 309 | 0.469 | 0.325 | 47 |
| Application Example 16 | Silicon oxide | 363 | 0.473 | 0.485 | 53 |
| Application Example 17 | Silicon oxide | 357 | 0.462 | 0.547 | 38 |
| Application Example 18 | Silicon oxide | 575 | 0.563 | 0.540 | 49 |
| Application Example 19 | K9 Glass | 1096 | 0.968 | 0.572 | 49 |
| Application Example 20 | K9 Glass | 985 | 1.041 | 0.657 | 49 |
| Application Example 21 | Silicon oxide | 545 | 0.573 | 0.542 | 49 |
| Application Example 22 | Silicon oxide | 397 | 0.573 | 0.532 | 50 |
| Application Example 23 | Silicon oxide | 480 | 0.675 | 0.575 | 50 |
| Application Example 24 | Silicon oxide | 595 | 0.576 | 0.569 | 51 |
| Application Example 25 | Silicon oxide | 575 | 0.563 | 0.540 | 59 |
| Application Example 26 | K9 Glass | 1096 | 0.968 | 0.572 | 49 |
| Application Example 27 | Silicon oxide | 401 | 0.477 | 0.537 | 53 |
| Application Example 28 | Silicon oxide | 210 | 0.575 | 0.532 | 52 |
| Application Example 29 | Silicon oxide | 306 | 0.679 | 0.545 | 49 |
| Application Example 30 | Silicon oxide | 277 | 0.475 | 0.396 | 45 |
| Application Example 31 | K9 Glass | 1027 | 1.269 | 0.520 | 38 |
| Application Example 32 | Silicon oxide | 252 | 0.505 | 0.608 | 30 |

The polishing data of the above examples show that the submicron particle size of the polishing powder of the present invention improves its dispersibility in the polishing slurry; the porous structure reduces its Young's modulus, makes it not easy to break during the polishing process, improves the surface accuracy of the workpiece after polishing and prolongs the life of the polishing powder. Therefore, the cerium oxide-based polishing powder provided in the present invention has both excellent polishing rate and polishing accuracy, and has a long service life.

It is to be understood that the above-described embodiments of the present invention are merely illustrative or explanatory of the principles of the present invention, and are not restrictive of the present invention. Therefore, any modifications, equivalent substitutions, improvements, etc. made without deviating from the spirit and scope of the present invention shall be included within the protection scope of the present invention. In addition, the appended claims of the present invention are intended to cover all variations and modifications that fall within the scope and boundaries of the appended claims, or equivalents of such scope and boundaries.

The present invention has been described above with reference to the examples thereof. However, these examples are for illustrative purposes only, and are not intended to limit the scope of the present invention. It is intended that the scope of the present invention be defined by the claims appended hereto and their equivalents. Various alternatives and modifications can be devised by those skilled in the art without departing from the scope of the present invention, and these alternatives and modifications are intended to fall within the scope of the present invention.

Although the embodiments of the present invention have been described in detail, it should be understood that various changes, substitutions and alterations can be made hereto without departing from the spirit and scope of the present invention.

It is to be understood that the above-described embodiments are merely illustrative for clarity and are not restrictive of the embodiments. Other variations and modifications will be apparent to persons skilled in the art in light of the above description. All embodiments need not be, and cannot be, exhaustive. And obvious variations or modifications derived therefrom are intended to be within the scope of the present invention.

## Claims

1. A cerium oxide-based polishing powder **characterized by** comprising porous secondary particles assembled from a plurality of primary grains, wherein the primary grains have a pore diameter of 2 to 30 nm, a pore volume of 0.10 to 0.50 cm³/g, a specific surface area of 10 to 80 m²/g, and the content of trivalent cerium at the surface accounts for 10% to 40% of the total content of cerium at the surface.

2. The cerium oxide-based polishing powder according to claim 1, **characterized in that** the primary grains have a pore diameter of 5 to 20 nm, a pore volume of 0.15 to 0.45 cm³/g, and the content of trivalent cerium at the surface accounts for 15% to 40% of the total content of cerium at the surface.

3. The cerium oxide-based polishing powder according to claim 1, **characterized in that** the secondary particle morphology of the cerium oxide-based polishing powder comprises at least one selected from rod-like, spherical, and triangular morphology.

4. The cerium oxide-based polishing powder according to claim 1, **characterized in that** the porous secondary particles have a particle size of 50 to 800 nm.

5. The cerium oxide-based polishing powder according to claim 1, **characterized in that** the chemical formula of the cerium oxide-based polishing powder is Ce₁₋ₓMₓO_{y}, wherein 0 ≤ x ≤ 0.4, 1 < y ≤ 2.0; the element M in the formula comprises at least one selected from a transition metal, an alkaline earth metal, aluminum, silicon, an alkali metal and a rare earth element other than cerium.

6. The cerium oxide-based polishing powder according to claim 5, **characterized in that** the M comprises at least one selected from lanthanum, praseodymium, neodymium, samarium, europium, gadolinium, terbium, dysprosium, thulium, ytterbium, yttrium, zirconium, iron, magnesium, sodium, calcium, and silicon.

7. The cerium oxide-based polishing powder according to claim 1, **characterized in that** the main body of the crystal structure of the cerium oxide-based polishing powder has a cubic fluorite structure.

8. A preparation method for a cerium oxide-based polishing powder, **characterized in that** the method is used for preparing the cerium oxide-based polishing powder according to any one of claims 1 to 7, and comprises the following steps:
S101, uniformly mixing a first solution and a second solution in a proportion and in a pre-set mixing mode to obtain a precipitate slurry; the first solution comprises a cerium salt and an M salt, and the second solution comprises a precipitant; wherein the ratio of the first solution to the second solution is 1: 2.5 to 6.5;
S201, after aging or hydrothermal treatment of the precipitate slurry for a pre-set time, performing solid-liquid separation to obtain a first solid;
S301, drying the first solid to obtain a second solid; and
S401, calcining the second solid under a calcining atmosphere to obtain a cerium oxide-based polishing powder.

9. The preparation method for a cerium oxide-based polishing powder according to claim 8, **characterized in that** the cerium salt and the M salt in the step S101 comprise at least one selected from sulfate, chloride, nitrate, citrate, and acetate; the total concentration of the cerium salt and the M salt in the first solution is 0.05 mol/L to 1.20 mol/L.

10. The preparation method for a cerium oxide-based polishing powder according to claim 8, **characterized in that** the precipitant in the step S101 comprises at least one selected from sodium hydroxide, potassium hydroxide, ammonium carbonate, ammonium bicarbonate, sodium carbonate, sodium bicarbonate, ammonia water, hydrazine hydrate, tetramethylammonium hydroxide, and urea; the precipitant concentration in the second solution is 0.10 mol/L to 6.00 mol/L.

11. The preparation method for a cerium oxide-based polishing powder according to claim 8, **characterized in that** the pre-set mixing mode in the step S101 comprises: mixing manner, mixing temperature and pH value of mixing process;
wherein the mixing manner comprises at least one selected from a high-speed stirring manner, a high-speed ball milling manner, a high-gravity manner, an ultrasonic manner, a microwave oscillation manner and a centrifugal manner;
the mixing temperature is 5 to 95 °C; and
a pH value of the mixing process is 4.5 to 10.0.

12. The preparation method for a cerium oxide-based polishing powder according to claim 8, **characterized in that** the aging or hydrothermal treatment temperature in the step S201 is 60 to 230 °C, and the aging or hydrothermal treatment time is 1 to 48 h.

13. The preparation method for a cerium oxide-based polishing powder according to claim 8, **characterized in that** the drying temperature in the step S301 is 50 to 100 °C; and the drying time is 4 to 24 h.

14. The preparation method for a cerium oxide-based polishing powder according to claim 8, **characterized in that** the calcining temperature in the step S401 is 400 to 1000 °C and the calcining time is 2 to 10 h.

15. The preparation method for a cerium oxide-based polishing powder according to claim 8, **characterized in that** the calcining atmosphere in the step S401 is an oxidizing atmosphere or a reducing atmosphere; the oxidizing atmosphere comprises at least one selected from oxygen and air; the reducing atmosphere comprises at least one selected from H₂, NH₃, and CO.

16. A polishing solution **characterized by** comprising the cerium oxide-based polishing powder according to any one of claims 1 to 7 or the cerium oxide-based polishing powder prepared by the preparation method according to claims 8 to 15.

17. The polishing solution according to claim 16, **characterized by** further comprising a dispersant, a pH adjuster, and water; wherein the content of the cerium oxide-based polishing powder is less than or equal to 20% by weight of the total weight of the polishing solution; the content of the dispersant is less than or equal to 5% by weight of the total weight of the polishing solution; the polishing solution has a pH in the range of 4 to 10.

18. The polishing solution according to claim 16, **characterized in that** the dispersant comprises at least one selected from sodium hexametaphosphate, sodium pyrophosphate, ethyl silicate, sodium lauryl sulfate, carboxymethyl cellulose, polyacrylamide, and polyethylene glycol.

19. Use of the cerium oxide-based polishing powder according to any one of claims 1 to 7, the cerium oxide-based polishing powder prepared by the preparation method according to claims 8 to 15 or the polishing solution according to claims 16 to 18 in plate glass, mobile phone cover plate glass, optical glass, liquid crystal display glass, glass substrates and/or integrated circuits.
